# EUROPÄISCHE PATENTSCHRIFT

(11) **EP 1 237 733 B1**
(45) Veröffentlichungstag und Bekanntmachung des Hinweises auf die Patenterteilung: **10.12.2003**
(21) Anmeldenummer: 99974133.3
(22) Anmeldetag: 28.10.1999
(51) Int. Cl.: B44D 3/12, B65D 25/20, G09F 3/02, G09F 3/10, G09F 23/00

(54) **FARBGEBINDESYSTEM**
PAINT CONTAINER SYSTEM
SYSTEME D'EMBALLAGE DE PEINTURE

(43) Veröffentlichungstag der Anmeldung: 11.09.2002
(73) Patentinhaber: J.W. Ostendorf GmbH & Co. KG., 48653 Coesfeld (DE)
(72) Erfinder: OSTENDORF, Michael, D-48653 Coesfeld (DE)
(74) Vertreter: Stenger, Watzke & Ring Patentanwälte
(86) Internationale Anmeldenummer: EP9908204
(87) Internationale Veröffentlichungsnummer: WO01030593

(56) Entgegenhaltungen:
- EP-A- 0 723 918
- EP-A- 0 919 476
- DE-U- 29 802 048
- GB-A- 2 240 205
- GB-A- 2 286 174
- US-A- 4 763 930
- US-A- 4 865 233
- US-A- 5 123 745
- US-A- 5 269 438

## Beschreibung

Die Erfindung betrifft ein Farbgebindesystem, bestehend aus einem eimerförmigen, einseitig durch einen Boden verschlossenen und eine durchgehend umlaufende Seitenwandung aufweisenden Behälter mit einem wiederverwendbaren Deckel zum Schließen des Behälters sowie wenigstens einem etikettartigen Informationsträger.

Farbgebindesysteme der gattungsgemäßen Art sind an sich bekannt und in großem Umfang im alltäglichen Einsatz. Ein Farbgebindesystem nach dem Oberbegriff des Anspruchs 1 ist z.B. aus der EP-A-0 919 476 bekannt. Die meist zylindrisch oder oval ausgebildeten eimerförmigen Behälter werden durch einen auf den Rand aufgeklemmten Deckel verschlossen. Die Behälter weisen in der Regel einen Tragebügel auf und sind mit Informationsträgern an der Außenseite versehen, auf denen die notwendigen Informationen über den Eimerinhalt angeordnet sind, meist durch Aufdrucken. Derartige Informationsträger sind in der Regel etikettartig ausgebildet, so daß sie nach Herstellung des Eimers, ggf. auch nach der automatischen Befüllung beispielsweise durch Kleben auf den Eimer aufgebracht werden können.

Allgemein ist es bei Farben wünschenswert, daß die Verbraucher einerseits den Zustand der im Behälter befindlichen Farbe überpüfen können, andererseits aus gestalterischen Zwecken den Farbton möglichst naturgetreu erkennen und ggf. vergleichen können. Dies ist jedoch bei derzeit im Verkehr befindlichen Farbgebindesystemen nicht möglich. Insbesondere die in großen Mengen hergestellten und in Verkehr gebrachten Wandfarben, die darüber hinaus vorrangig in Baumarktketten vertrieben werden, werden meist zu Zwecken der universellen Einsetzbarkeit in weißen Kunststoffeimern in den Verkehr gebracht. Häufig können vorgemischte Farben anhand von aufgeklebten Farbidentifikatoren erkannt werden, welche jedoch üblicherweise nicht naturgetreu die im Behälter befindliche Farbe wiedergeben.

Zwar ist ein Öffnen der Gebinde zu Prüfzwecken des Farbtons aus Originalitätsgründen selbstverständlich nicht vorgesehen, doch kommt es immer wieder vor, daß Verbraucher die Gebinde für ein Farbvergleichstest öffnen. Wird der Behälter nicht wieder fachgerecht verschlossen, so führt dies zu einem Austrocknen der im Behälter befindlichen Farbe, wodurch diese unbrauchbar wird. Bei einem nicht fachgerechten Wiederverschließen des Behälters kann es zudem beim Transport des Behälters infolge der auf den Behälter einwirkenden Transportbewegungen zu einem Abheben des Deckels und unter Umständen zu einem daraus resultierenden Auslaufen der Farbe führen.

In jüngerer Zeit setzen sich auch im Massengeschäft sogenannte Tintingsysteme durch, bei welchen in eine weiße Farbe eine exakte Menge von Pigmentanteilen eingemischt wird, so daß sich ein definierter Farbton ergibt. Auch in diesem Fall sollte den Benutzern ermöglicht werden, den Farbton zu erkennen und zu überpüfen.

Ausgehend von dem oben genannten Stand der Technik liegt der vorliegenden Erfindung die **Aufgabe** zugrunde, unter Vermeidung der genannten Nachteile ein Farbgebindesystem der gattungsgemäßen Art dahingehend zu verbessern, daß eine erstmalige Öffnung des Behälters von außen erkennbar ist, wobei gleichzeitig ein unbeabsichtigtes Anheben des Deckels verhindert werden soll und daß ohne Öffnung des Behälters eine möglichst ungehinderte und aussagekräftige optische Überprüfung des Behälterinhalts möglich ist.

Zur technischen **Lösung** dieser Aufgabenstellung wird mit der Erfindung vorgeschlagen, daß die umlaufende Seitenwandung deckelseitig einen mit dem Deckel bündig abschließenden Funktionsrand aufweist, der für ein Anheben des Deckels mit wenigstens einer durch ein Originalitätssigel verschlossenen Griffmulde versehen ist, und daß sowohl der Informationsträger als auch zumindest die Seitenwandung des Behälters wenigstens teilweise aus transparentem Material gebildet sind.

Das erfindungsgemäße Farbgebindesystem ermöglicht den Verbrauchern eine nahezu ungehinderte Überprüfung des Zustandes des Behälterinhaltes einerseits, sowie auch des Farbtons des Behälterinhaltes in seiner naturgetreuen Erscheinungsweise. Dabei ist das erfindungsgemäße Farbgebindesystem wirtschaftlich produzierbar, ohne im wesentlichen herkömmliche Produktionsprozesse grundlegend ändern zu müssen.

Der deckelseitig am oberen Behälterrand angeordnete Funktionsrand schließt bündig mit dem Behälterdeckel ab, womit ein ungewolltes Hintergreifen zum Abheben des Deckels verhindert wird. Somit wird sichergestellt, daß auch bei einer unsachgemäßen Lagerung bzw. Stapelung des erfindungsgemäßen Behälters ein Anheben des Behälterdeckels infolge einer Verkantung oder Verhakelung vermieden wird. Für ein sachgerechtes Öffnen des Behälters ist der Funktionsrand mit wenigstens einer Griffmulde versehen, so daß der Behälter einhändig durch den Verbraucher durch Untergreifen des Deckels im Bereich der Griffmulde angehoben und der Behälter geöffnet werden kann. Zur Wahrung der Originalität ist die Griffmulde mit einem Originalitätssigel verschlossen, welches vor einer Erstöffnung des Behälters zu entfernen ist.

Der Funktionsrand ist aus einer ringförmig ausgebildeten Kunststofflippe gebildet, die durch darunterliegende Versteifungsrippen verstärkt ist. Mithin stabilisiert der Funktionsrand in vorteilhafter Weise den Behälter hinsichtlich seiner Festigkeit. Darüber hinaus stellt der Funktionsrand eine Stapelhilfe dar.

Der eimerförmige Behälter kann in an sich bekannter Weise aus Kunststoff, vorzugsweise Polypropylen im Spritzgußverfahren hergestellt werden, wobei die Art der Kunststoffrezeptur eine mehr oder weniger starke Trübung der Durchsichtigkeit bewirkt. In einer vorteilhaften Ausgestaltung ist die Trübung nahezu ganzflächig auf ein Minimum reduziert. Dabei kann sich eine untere Grenze durch die Weichheit des Kunststoffes ergeben. Die härtenden Additive führen zu einer Zunahme der Trübung. Der weitestgehend transparent gestaltete Behälter, der auch vollständig transparent ausgebildet sein kann, kann gemäß einem vorteilhaften Vorschlag der Erfindung Bereiche unterschiedlicher Trübung aufweisen. So kann beispielsweise ein an der Behälteroberseite angeordneter, umlaufender Rand starker Trübung vorgesehen sein, durch welchen die Oberfläche des Farbinhaltes nicht zu erkennen ist. Durch diese Maßnahme wird ein einheitlich sauberes Erscheinungsbild im Bereich der Oberflächenspiegel des Farbinhaltes erreicht.

Der Informationsträger ist in vorteilhafter Weise eine Folie, die mit den erforderlichen Informationen, Namen, Werbeinformationen, Produkt- und Verarbeitungsdaten und dergleichen bedruckt ist. Auch kann ein Teil des Seitenwandbereichs selbst als Informationsträger ausgelegt und für ein Bedrucken vorbereitet sein.

Der Deckel kann im Farbton der im Eimer werksseitig eingefüllten Farbe gefärbt sein.

Gemäß einem weiteren Merkmal der Erfindung weist der Deckel eine zusätzliche verschließbare Öffnung auf, durch die hindurch die im Behälter befindliche Farbe portionierbar ausgießbar ist, und an welcher ein in der Länge veränderbares Ausgießelement anordbar ist. Die Ausbildung einer im Deckel angeordneten Öffnung ist zudem für die oben beschriebene Tintingsysteme besonders geeignet. Aber auch in herkömmlicher Weise kann die zusätzliche Öffnung zum Einbringen von Farbpigmenten in die im Behälter befindliche Farbe genutzt werden, ohne daß der gesamte Behälter zu öffnen wäre.

Mit der Erfindung wird ein einfach und wirtschaftlich herstellbares Farbgebindesystem bereitgestellt, bei welchem der Behälterdeckel ohne die Ausbildung eines überstehenden Randes bündig mit dem deckelseitig an der Seitenwandung des Behälters umlaufend angeordneten Funktionsrand abschließt. Ein unbeabsichtigtes Abheben des Deckels wird somit verhindert. Der Funktionsrand kann zudem als zweite Aufklemmebene für den Deckel ausgebildet sein und eine Eingriffsmulde für ein Anheben des Deckels aufweisen. Zur Sicherung der Originalität ist die Griffmulde mit einem Originalitätssigel verschlossen, welches bei einer Erstöffnung des Behälters zu entfernen ist. Das Farbgebindesystem ermöglicht zudem in vorteilhafter Weise einen weitestgehend ungehinderten Blick auf die im Behälter befindliche Farbe und die Erkennung des Farbtons. Selbst im Bereich aufgedruckter Informationen wird der Blick auf den Behälterinhalt für den Verbraucher kaum gehindert.

Weitere Vorteile und Merkmale der Erfindung ergeben sich aus der folgenden Beschreibung anhand der Figuren. Dabei zeigen:
- Fig. 1: eine schematische Darstellung eines Ausführungsbeispieles eines Farbgebindesystems und
- Fig. 2: eine schematische Darstellung eines Informationsträgers.

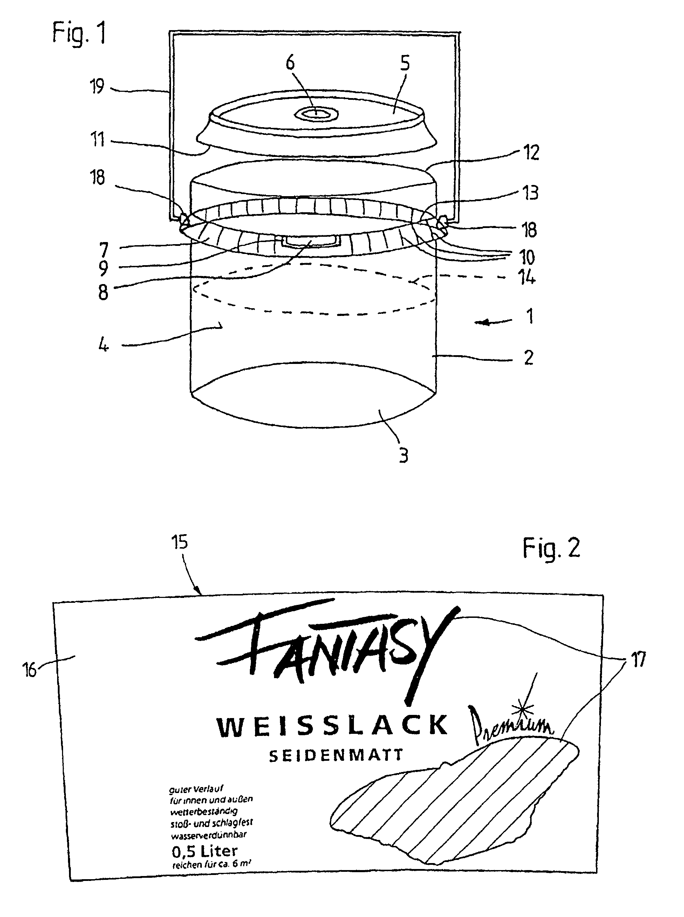

Fig. 1 zeigt ein erfindungsgemäßes Gebinde 1 bestehend aus einem Behälter 2 mit einem wiederverwendbaren Deckel 5 zum Verschließen des Behälters 2. Der Behälter 2 weist seinerseits einen Boden 3 sowie eine durchgehend umlaufende Seitenwandung 4 auf. Im gezeigten Ausführungsbeispiel ist sowohl die umlaufende Seitenwandung 4 als auch der Boden 3 des Behälters 2 aus durchsichtigem Kunststoff gebildet. Der den Behälter 2 verschließende Deckel 5 ist hingegen aus einem nicht transparenten Kunststoff geformt.

Der Deckel 5 weist eine verschließbare Öffnung 6 auf, in welche sich im gezeigten Ausführungsbeispiel ein stopfenartiger Verschluß befindet. Auch kann die Öffnung 6 mit einem in dieser Figur nicht dargestellten Ausgießelement versehen sein, welches in vorteilhafter Weise in der Länge veränderbar ausgebildet sein kann.

Deckelseitig weist die umlaufende Seitenwandung 4 des Behälters 2 einen Funktionsrand 7 auf, der aus einer ringförmig ausgebildeten Kunststofflippe mit darunter liegenden Verstärkungsrippen 10 gebildet ist. Dabei ist die Oberkante 13 des Funktionsrandes 7 derart ausgebildet, daß der auf den Behälterrand 12 aufgepreßter Deckel 5 mit seiner Unterkante 11 auf den Funktionsrand 7 aufgepreßt wird, also zwei verschiedene Klemmbereiche hat. Um ein einfaches Abheben des Deckels 5 zu ermöglichen, weist der Funktionsrand 7 eine Griffmulde 9 auf, die es dem Verbraucher ermöglicht, einhändig den Deckel 5 vom Behälter 2 abzuheben. Zur Sicherung der Originalität des Behälterinhalts ist die Griffmulde 9 mit einem Originalitätssigel 8 verschlossen, welches vor einer Erstöffnung des Behälters 2 zu entfernen ist.

Für eine vereinfachte Handhabung des Behälters 2 sowie für einen sicheren Transport durch den Verbraucher ist der Behälter 2 mit einem Griffelement 19 versehen, welches über am Funktionsrand 7 ausgebildete Aufnahmen 18 drehbar gelagert angeordnet ist.

Der Boden 3, die Seitenwandung 4 sowie der Funktionsrand 7 können einstückig hergestellt werden, wobei auch der gesamte Funktionsrand 7 ebenfalls aus durchsichtigem Kunststoff gebildet sein kann. Die gestrichelte Linie 14 zeigt eine Randbegrenzung, durch welche zusammen mit dem oberen Behälterrand 12 ein ringförmiges Segment in der Seidenwandung 4 gebildet wird. Dieses Segment kann mit einer starken Trübung des transparenten Kunststoffs oder einer Einfärbung versehen sein. Dieses obere, dann undurchsichtige Segment bewirkt ein sauberes und immer gleichmäßiges Erscheinungsbild des mit Farbe gefüllten Behälters 2, ohne daß ein bspw. durch Bewegung und damit Verschwappen im Behälter 2 befindlicher Farbe ein unsauberer oberer Spiegel erzeugt wird.

Auf den in Fig. 1 dargestellten Behälter 2 läßt sich ein wie in Fig. 2 gezeigter etikettförmiger Informationsträger 15 aufbringen, welcher im gezeigten Ausführungsbeispiel aus einer mit Informationen 17 bedruckten, durchsichtigen Folie 16 gebildet ist. Es ist offensichtlich, daß auch die auf den Behälter 2 aufgebrachte Folie den Blick auf das im Behälter 2 befindliche Produkt nicht behindert.

Das beschriebene Ausführungsbeispiel dient nur der Erläuterung und ist nicht beschränkend.

### Bezugszeichenliste

- 1: Gebinde
- 2: Behälter
- 3: Boden
- 4: Seitenwandung
- 5: Deckel
- 6: Öffnung
- 7: Funktionsrand
- 8: Originalitätssigel
- 9: Griffmulde
- 10: Verstärkungsrippe
- 11: Deckelunterkante
- 12: Behälterrand
- 13: Oberkante
- 14: Randbegrenzung
- 15: Informationsträger
- 16: Folie
- 17: Information
- 18: Aufnahme
- 19: Griffelement

## Patentansprüche

1. Farbgebindesystem, bestehend aus einem eimerförmigen, einseitig durch einen Boden (3) verschlossenen und eine durchgehend umlaufende Seitenwandung (4) aufweisenden Behälter (2) mit einem wiederverwendbaren Deckel (5) zum Schließen des Behälters (2) sowie wenigstens einem etikettartigen Informationsträger (15),
wobei sowohl der Informationsträger (15) als auch zumindest die Seitenwandung (4) wenigstens teilweise aus transparentem Material gebildet sind, **dadurch gekennzeichnet,**
**daß** die umlaufende Seitenwandung (4) deckelseitig einen mit dem Deckel (5) bündig abschließenden Funktionsrand (7) aufweist, der für ein Anheben des Deckels (5) mit wenigstens einer durch ein Originalitätssiegel (8) verschlossenen Griffmulde (9) versehen ist, und daß der Deckel eine verschließbare Öffnung aufweist, an welcher ein in seiner Länge veränderbares Ausgießelement anordbar ist.

2. Farbgebindesystem nach Anspruch 1, **dadurch gekennzeichnet, daß** der Behälter (2) vollständig transparent ausgebildet ist.

3. Farbgebindesystem nach einem der Ansprüche 1 oder 2, **dadurch gekennzeichnet, daß** der Deckel (5) transparent ausgebildet ist.

4. Farbgebindesystem nach einem der Ansprüche 1 bis 3, **dadurch gekennzeichnet, daß** der Informationsträger (15) eine bedruckbare Folie (16) ist.

5. Farbgebindesystem nach einem der vorhergehenden Ansprüche, **dadurch gekennzeichnet, daß** der Informationsträger (15) als Teil der umlaufenden Seitenwandung (4) des Behälters (2) ausgebildet ist.

6. Farbgebindesystem nach einem der vorhergehenden Ansprüche, **dadurch gekennzeichnet, daß** der Funktionsrand (7) Aufnahmen (18) zur Anordnung eines Griffelements (19) aufweist.

7. Farbgebindesystem nach einem der vorhergehenden Ansprüche, **dadurch gekennzeichnet, daß** nach einem Aufbrechen die Reste des Originalitätssiegels (8) am Funktionsrand (7) verbleiben.

8. Farbgebindesystem nach einem der vorhergehenden Ansprüche, **dadurch gekennzeichnet, daß** sämtliche Elemente aus Kunststoff gebildet sind.

9. Farbgebindesystem nach einem der vorhergehenden Ansprüche, **dadurch gekennzeichnet, daß** wenigstens der Behälter (2) und der Deckel (5) aus Polypropylen gebildet sind.

10. Farbgebindesystem nach einem der vorhergehenden Ansprüche, dadurch gekenzeichnet, daß das Griffelement (19) aus Polypropylen gebildet ist.

11. Farbgebindesystem nach einem der vorhergehenden Ansprüche, **dadurch gekennzeichnet, daß** der Deckel (5) in dem Farbton einer in den Behälter einzubringenden Farbe gefärbt ist.

## Claims

1. Paint container system, consisting of a bucket-shaped receptacle (2), which is closed off on one side by a bottom (3) and comprises an encircling side wall (4) and a reusable lid (5) for closing the receptacle (2), and of at least one label-like information carrier (15), wherein both the information carrier (15) and at least the side wall (4) are formed at least in part from transparent material,
**characterised in that** the encircling side wall (4) comprises on the lid side a functional rim (7) which is flush with the lid (5) and is provided with at least one recessed grip (9), closed off by an originality seal (8), for lifting the lid (5), and that the lid comprises an opening which can be closed off and at which a pouring element of a variable length can be arranged.

2. Paint container system according to Claim 1, **characterised in that** the receptacle (2) is completely transparent.

3. Paint container system according to either of Claims 1 and 2, **characterised in that** the lid (5) is transparent.

4. Paint container system according to any one of Claims 1 to 3, **characterised in that** the information carrier (15) is a printable film (16).

5. Paint container system according to any one of the preceding Claims, **characterised in that** the information carrier (15) is formed as part of the encircling side wall (4) of the receptacle (2).

6. Paint container system according to any one of the preceding Claims, **characterised in that** the functional rim (7) comprises holding fixtures (18) for arranging a handle element (19).

7. Paint container system according to any one of the preceding Claims, **characterised in that** the remnants of the originality seal (8) remain at the functional rim (7) after the seal has been broken open.

8. Paint container system according to any one of the preceding Claims, **characterised in that** all the elements are formed from a plastics material.

9. Paint container system according to any one of the preceding Claims, **characterised in that** at least the receptacle (2) and the lid (5) are formed from polypropylene.

10. Paint container system according to any one of the preceding Claims, **characterised in that** the handle element (19) is formed from polypropylene.

11. Paint container system according to any one of the preceding Claims, **characterised in that** the lid (5) is coloured in the shade of a paint which is to be introduced into the receptacle.

## Revendications

1. Système d'emballage en fût métallique pour peinture, composé d'un récipient (2) en forme de seau, fermé d'un côté par un fond (3) et présentant une paroi latérale (4) circonférentielle en continu, avec un couvercle réutilisable (5) permettant de fermer le récipient (2) ainsi qu'au moins un support d'informations (15) de type étiquette, à la fois le support d'informations (15) et au moins la paroi latérale (4) étant réalisés au moins en partie dans un matériau transparent,
**caractérisé en ce que**
la paroi latérale circonférentielle (4) présente côté couvercle un bord fonctionnel (7) se terminant de façon affleurée avec le couvercle (5), le bord étant muni d'au moins une poignée noyée (9) fermée par un sceau d'origine (8) afin de permettre le soulèvement du couvercle (5), et **en ce que** le couvercle présente un orifice refermable au niveau duquel un élément formant bec verseur de longueur variable peut être disposé.

2. Système d'emballage en fût métallique pour peinture selon la revendication 1, **caractérisé en ce que** le récipient est réalisé de façon complètement transparente.

3. Système d'emballage en fût métallique pour peinture selon l'une quelconque des revendications 1 ou 2, **caractérisé en ce que** le couvercle (5) est réalisé de façon transparente.

4. Système d'emballage en fût métallique pour peinture selon l'une quelconque des revendications 1 à 3, **caractérisé en ce que** le support d'informations (15) est un film imprimable (16).

5. Système d'emballage en fût métallique pour peinture selon l'une quelconque des revendications précédentes, **caractérisé en ce que** le support d'informations (15) est réalisé comme une partie de la paroi latérale circonférentielle (4) du récipient (2).

6. Système d'emballage en fût métallique pour peinture selon l'une quelconque des revendications précédentes, **caractérisé en ce que** le bord fonctionnel (7) présente des logements (18) permettant de disposer un élément de poignée (19).

7. Système d'emballage en fût métallique pour peinture selon l'une quelconque des revendications précédentes, **caractérisé en ce qu'**après rupture, les résidus du sceau d'origine (8) restent sur le bord fonctionnel (7).

8. Système d'emballage en fût métallique pour peinture selon l'une quelconque des revendications précédentes, **caractérisé en ce que** tous les éléments sont réalisés en matière plastique.

9. Système d'emballage en fût métallique pour peinture selon l'une quelconque des revendications précédentes, **caractérisé en ce qu'**au moins le récipient (2) et le couvercle (5) sont réalisés en polypropylène.

10. Système d'emballage en fût métallique pour peinture selon l'une quelconque des revendications précédentes, **caractérisé en ce que** l'élément de poignée (19) est réalisé en polypropylène.

11. Système d'emballage en fût métallique pour peinture selon l'une quelconque des revendications précédentes, **caractérisé en ce que** le couvercle (5) est coloré dans la nuance de couleur d'une peinture à introduire dans le récipient.
